# EUROPEAN PATENT APPLICATION

(11) **EP 4 023 353 A1**
(43) Date of publication of application: **06.07.2022**
(21) Application number: 21217329.8
(22) Date of filing: 23.12.2021
(51) Int. Cl.: B09C 1/10

(54) **METHOD OF MICROBIAL MINERAL PRECIPITATION IN A POROUS MEDIUM HAVING HYDRAULIC CONDUCTIVITY**

(30) Priority: 31.12.2020 NL 2027257
(71) Applicant: Groundwater Technology B.V., 3047 AN Rotterdam (NL)
(72) Inventor: VEENIS, Yvo Marco Maria, Stroe (NL)
(74) Representative: Algemeen Octrooi- en Merkenbureau B.V.

(57) **Abstract**

The present invention relates to a method of microbial mineral precipitation in a porous medium having hydraulic conductivity, such as soil, sediment, ashes, concrete or the like, wherein the method comprises the subsequent steps of:
a) activating the porous medium, and b) treating the porous medium to induce mineral precipitation, wherein the porous medium is treated with a source of urea and a source of calcium ions, and wherein step a) comprises the step of treating the porous medium with a source of urease and a source of hydrocarbon nutrient. The present invention further relates to the use of the method for the reinforcement of a porous medium, for the abatement of contamination, or for the capturing or retardation of heavy metals and/or perfluorinated compounds.

## Description

The present invention relates to a method of microbial mineral precipitation in a porous medium having hydraulic conductivity, such as soil, sediment, ashes or the like. The present invention further relates to the use of the method of the present invention for the reinforcement of a porous medium, for the abatement of contamination, or for the capturing or retardation of heavy metals and/or perfluorinated compounds.

Microbial mineral precipitation is a biochemical process used to stabilize soil, remedy soil liquefaction and improve the properties of sediment layers and concrete through remediation of cracks and corrosion. The process involves the precipitation of minerals synthesized by microorganisms. Several mechanisms are known by which microorganisms can induce mineral precipitation. Examples are urea hydrolysis, denitrification, sulphate production and iron reduction. The hydrolysis of urea, catalysed by microbial urease, results in ammonium and carbonate, which spontaneously hydrolyses to form ammonia and carbonic acid. The process of microbial mineral precipitation is initiated by providing to soil, a sediment layer or concrete a source of urea as well as a source of minerals in ionic form. In order for microbial mineral precipitation to effectively reinforce soil, rock or concrete at any depth, the process of microbial mineral precipitation needs to be controllable. And for microbial mineral precipitation to be effective in any volume, minerals need to be synthesized in vast quantity. However, with conventional methods, microbial mineral precipitation is effective only in the top layer of the soil, sediment layer or concrete and only in smaller volumes.

In order to provide a robust and reliable method wherein a porous medium having hydraulic conductivity can be reinforced on any depth and/or any volume, the present invention provides herewith a method of microbial mineral precipitation in a porous medium having hydraulic conductivity, such as soil, sediment layer, ashes, concrete or the like, wherein the method comprises the subsequent steps of:
a) activating the porous medium; and
b) treating the porous medium to induce mineral precipitation, wherein the porous medium is treated with a source of urea and a source of calcium ions. It was found that providing a step a) of activating the porous medium by treatment of the porous medium with a source of urease and a source of hydrocarbon nutrient, a robust and reliable method for the reinforcement of the porous medium at any depth and/or any volume can be provided. By activating the porous medium first by treatment of the porous medium with a source of urease and a source of hydrocarbon nutrient, before providing the components needed to induce mineral precipitation, the ureolytic microorganisms comprised in porous media, such as soil, are pre-activated before induce mineral precipitation, e.g. by forming calcite. By activating the ureolytic microorganisms in the porous medium before actually activating the mineral precipitation process, an increased volume of the porous medium and greater depths (in particular the porous medium being soil) can be treated by the method of the present invention. In other words, the induction of mineral precipitation, e.g. the formation of calcite, can be better controlled by volume and depth.

In addition to this, it was further found that the method of the present invention also provides in the abatement of contamination, or capturing or retardation of heavy metals and/or perfluorinated compounds. It was observed that by flushing the porous medium with an aqueous fluid the concentrations heavy metals and/or perfluorinated compounds in the flushing fluid was significantly reduced at the termination of the method of the present invention compared to the concentrations comprised in the flushing fluid before applying the method of the present invention to the porous medium. It was found that the concentration decrease of, for example, perfluorinated compounds, such as PFAS compounds, in the flushing fluid was about 90%, thus significantly reducing the percolation of heavy metals and/or perfluorinated compounds in the groundwater.

The porous medium may be any type of medium suitable for performing the method of the present invention. Preferably the porous medium is selected from the group consisting of soil, sediment, ashes, geomaterials, concrete materials and concrete structures. In fact, any porous medium having hydraulic conductivity, i.e. a medium or material having the ability to allow water movement, may be suitable for the application of the method of the present invention.

Hydraulic conductivity refers to the ease with which a fluid can move through a porous medium. Hydraulic conductivity is often used to describe movement of liquid water through soil or rock, however other materials or media may be suitable as well. Examples may include, but are not limited to, concrete structures, ashes, concrete materials, or the like.

The source of urea may be any urea comprising product, such as products selected from the group consisting of mammal urine, mammal excrements, wastewater, natural nitrogen fertilizers and synthetic nitrogen fertilizers.

The source of calcium ions may be selected from the group consisting of water soluble inorganic calcium salts, water soluble organic calcium compounds and calcium containing gasses or solids. Preferably calcium salts, like calcium chloride, are used as a source of calcium ions.

It is noted that the source of calcium ions is selected such that the concentration of available calcium ions to treat the porous medium and to induce mineral precipitation is considerably high. For example, in case the porous medium is treated by providing an aqueous calcium salt containing solution to the porous medium, the concentration of the calcium salt is preferably selected such that the molarity of the available calcium ions is up to about 1.0 M calcium ions, preferably between about 0.5 M and about 1.0 M calcium ions, or between 0.7 M and 0.9 M calcium ions.

The source of urease as used in the activating step of the present invention may be selected from the group consisting of microbial produced urease, urease harvested from plants or parts or seeds thereof, and artificial synthesized urease (i.e. produced by man-controlled chemical reactions). Some suitable and preferred sources of urease may comprise flour, such as Jack bean flour or soy flour selected from the group consisting of low-fat soy flour and full-fat soy flour. It was found that by using a source of urease, the microbial urease production by microorganisms present in the porous medium, e.g. microbes in soil, is initiated and stimulated in an accelerated way.

The source of hydrocarbon nutrient as used in the activating step of the present invention may be selected from the group consisting of molasses, (black) treacle, protamylasse, alkane-alcohols, salts and esters containing one or more ethanoate-groups and/or fermented molasses, fermented black treacle and fermented protamylasse. By providing an activating step wherein hydrocarbon nutrients are provided to the porous medium, the microorganism present in the porous medium, e.g. microbes in soil, start consuming the hydrocarbon nutrients in order to multiply themselves and to start producing the enzyme urease, needed for the mineral precipitation to be induced by the treatment step of the present invention.

It is noted that, with regard to the suitable source of hydrocarbon nutrient, treacle or black treacle is a term used for a viscous product resulting from refining sugarcane or sugar beets into sugar. It is further noted that protamylasse is known as a residual compound occurring during the industrial production of starch from potatoes. Further, suitable alkane-alcohols may include methanol or ethanol.

As it was found, the method of the present invention also provides in the abatement of contamination, or capturing or retardation of heavy metals and/or perfluorinated compounds. Perfluorinated compounds refer to carbon containing compounds in which no carbon atoms in the compound have carbon-hydrogen bonds and instead contain carbon-fluorine bonds. In particular, perfluorinated compounds refer to fluorinated chemical compounds made of carbon, nitrogen, sulphur, or mixtures thereof (i.e. CₐN_{b}S_{c}F_{d}, where a, b, c, and d are non-negative integers).

It was further found that in order to increase the abatement of contamination, or capturing or retardation of heavy metals and/or perfluorinated compounds by the method of the present invention, the porous medium may be treated, in step b), with activated carbon. Optionally, the porous medium is treated, in step b), with activated carbon in further combination with a polymer. The polymer as used in the method of the present invention may be suitable as a carrier material for the activated carbon. However, it was found that the presence of such carrier material is not necessary in order to observe a beneficial effect of the addition of activated carbon to the treatment step of the method of the present invention.

The activated carbon, also called activated charcoal, as optionally used in the present invention is preferably a form of carbon processed to have small low-volume pores that increase the surface area available for adsorption or chemical reactions. Activated carbon, in all its various forms, and its uses is well known to the person skilled in the art. The activated carbon aids in capturing organic-based and inorganic contaminants and in the retardation of heavy metals and/or perfluorinated compounds, and thus in the abatement of contamination. Capturing of contaminants prevents contaminants to spread in the environment by rain- or groundwater.

It is noted that in the treatment step of the method of the present invention, the porous medium is treated with a source of urea in order to induce the mineral precipitation (in combination with available calcium ions). In order to react any urea as used in the method of the present invention, the method may further comprise the step of:
c) after step b), post-treating the porous medium, wherein the porous medium is treated with a source of calcium ions.

The source of calcium ions may be selected from the same source of calcium ions as used in the treatment step of the present method or may be selected from a different source of calcium ions compared to the source of calcium ions used in the treatment step of the present method. Preferably the same source of calcium ions is selected. Even more preferably a calcium salt, e.g. calcium chloride, is used in the post-treatment step of the method of the present invention. Also for the post-treatment step the concentration of calcium ions is considerably high. Thus, in case the porous medium is post-treated by providing an aqueous calcium salt containing solution to the porous medium, the concentration of the calcium salt is preferably selected such that the molarity of the available calcium ions is up to about 1.0 M calcium ions, preferably between about 0.5 M and about 1.0 M calcium ions, or between 0.7 M and 0.9 M calcium ions.

Given the method of the present invention, the porous medium is treated by the components comprised in the activating step, the treating step and, optionally, the post-treating step. Although any way of treatment of the porous medium may be suitable for applying the method of the present invention, the most feasible way to treat the porous medium in each and every step, is to provide an aqueous solution to the porous medium. Typically, such aqueous solution may be provided to the porous medium by flushing the porous medium with the aqueous solution. Also, such aqueous solution may be provided to (or into) the porous medium by injecting the porous medium with the aqueous solution. Suitable volumes provided to the porous medium may be in the range of 1-5000 litre per 1 m³ porous medium. It is noted that by treating the porous medium in a different way similar results may be obtained as it is the case by injecting or flushing the porous medium with an aqueous solution.

However, in case treatment of the porous medium by injecting or flushing the porous medium with an aqueous solution is preferred, the method of the present invention may comprise the following steps, wherein:
- step a) comprises the step of providing an aqueous activating solution to the porous medium, wherein the activating solution comprises the source of urease and the source of hydrocarbon nutrient. In addition to the source of urease and the source of hydrocarbon nutrient the activating solution may further comprise a source of urea. The source of urea may be selected from the same source of urea as used in the treatment step of the present method or may be selected from a different source of urea compared to the source of urea used in the treatment step of the present method. Preferably the same source of urea is selected for use in the activating solution of the present invention.

Given the activating solution for use in step a) of the present method, the activating solution may comprise up to about 5 wt% of urease-source, up to about 10 wt% hydrocarbon nutrient and/or up to 60 about wt% urea based on the total amount of water used in the activating solution. Preferably, the activating solution for use in step a) of the present method may comprise up to about 10 M urease-source, up to about 0.2 M hydrocarbon nutrient and/or up to about 0.5 M urea.

With regard to the treatment step of the present method it is noted that the source of urea and the source of calcium ions may be provided to the porous medium simultaneously or, alternatively, subsequently. In case both sources of components are provided subsequently to the porous medium, it is noted that the source of urea is provided first, followed by the source of calcium ions. Even further, in particular in the case of providing both sources of components subsequently, the treatment step is preferably repeated several times, e.g. preferably at least two, at least three, at least four, at least five or at least multiple times.

In case both sources of components are provided simultaneously, step b) of the present method may comprise the step of:
- providing an aqueous treating solution to the porous medium, wherein the treating solution comprises the source of urea and the source of calcium ions.

Alternatively, i.e. in case both source of components are provided subsequently, step b) of the present method may comprise the subsequent steps of:
- providing a first aqueous solution to the porous medium, wherein the first solution comprises the source of urea to the porous medium; and
- providing a second aqueous solution to the porous medium, wherein the second solution comprises the source of calcium ions.

In case step b) of the present method consist of the subsequent steps of providing both sources of components, small amounts of both components are provided to the porous medium per step. The amounts are preferably selected such that the total amount of component provided to the porous medium (after repeating step b) several times) equals the total amount of component provided to the porous medium in case the components should have been provided simultaneously to the porous medium. The total amount of components comprised in the treating solution may be up to about 75 wt% calcium ions and/or up to about 10 wt% urea based on the total amount of water used in the treating solution. Preferably, the treating solution comprises up to about 1 M (preferably about 0.85 M) calcium ions and/or up to about 1 M urea. Additionally, the treating solution may further comprise a small amount of hydrocarbon nutrient, e.g. about a factor 100 lower compared to the amount of hydrocarbon nutrient comprised in the activating solution.

In addition to the treating solution, step b) may further comprise the subsequent step of:
- providing an aqueous adsorbing solution to the porous medium, wherein the adsorbing solution comprises an activated carbon and, optionally, a polymer.

The adsorbing solution may preferably comprise up to about 5 wt% activated carbon based on the total amount of water used in the adsorbing solution.

In case the post-treatment step is performed by flushing or injecting the porous medium, step c) may comprise the step of:
- providing a aqueous post-treating solution to the porous medium, wherein the post-treating solution comprises a source of calcium ions.

As the post-treating solution is used to react any urea provided to and left over in the porous medium, the concentration of the calcium ions in the post-treating solution is considerably high. Preferably, the total amount of calcium ions in the post-treating solution may be up to about 75 wt% based on the total amount of water used in the post-treating solution. Preferably, the post-treating solution comprises up to about 1 M (preferably about 0.85 M) calcium ions. It is further noted that the post-treating solution is substantially free of a source of urea and/or a source of hydrocarbon nutrient. Treating the porous medium with calcium ions, but omitting hydrocarbon nutrient and urea, promotes urea hydrolysis using up the remaining urease source and hydrocarbon nutrient and hydrolysing the remaining urea. The post treatment step allows for predetermined or ad hoc control over the end result achieved by applying the method after a certain period of time or after reaching a certain level, volume or depth of mineral precipitation. However, in some cases some presence of a source of hydrocarbon nutrient is still preferred in the post-treating solution in order to still activating the microorganisms, e.g. microbes in soil, to produce urease in order to precipitate the remaining urea.

In addition to the above defined method, the method may further comprise a pre-treating step, wherein the porous medium is pre-treated before performing the activating step. In case of a pre-treating step, the method of the present invention comprises the step of:
- before step a), pre-treating the porous medium, wherein the porous medium is pre-treated by providing a pre-treating solution to the porous medium, wherein the pre-treating solution comprises an ureolytic microorganism culture.

By providing the pre-treating step, a porous medium may be subjected to the method of the present invention whereas the porous medium itself is not suitable for microbial mineral precipitation by the absence of, or is low in, any microorganism (i.e. urease producing microorganism). By providing the culture in the pre-treating step, the porous medium is seeded with the microorganisms needed for performing the microbial mineral precipitation.

In general, the duration of each of the steps performed as well as the time period between subsequent method steps depends on the incubation time of each of the steps performed. The incubation time depends, for example, on the quality of the porous medium, availability of microorganisms suitable for facilitating the microbial mineral precipitation process, and the like. Typically, a subsequent method step is performed after 1 hour to 3 months of incubation time of the respective preceding method step.

In case the method of the present invention is performed in soil, e.g. in an earth layer, the method of the present invention may be performed at any depth, e.g. at a depth of 0 m to about 500 m. However, the method of the present invention may also be performed at greater depths, e.g. at a depth of at least 500 m.

The present invention further relates to the use of the method for the reinforcement of the porous medium. The specific use of the porous medium such as soil, or concrete may require the improvement of its properties e.g. its strength, stiffness, volume stability, permeability and durability, These properties may be insufficient for the intended use due to human intervention or physical, chemical or biological weathering, erosion or other natural process. Strengthening and consolidation of the porous medium can be achieved by employing various techniques, such as drainage, densification, and chemical grouting. These techniques have, however, certain disadvantages. They are expensive, can cause excessive reduction of soil permeability, can disturb the ecosystem and/or can be toxic/hazardous because of the use of chemicals or because they cause a considerable increase in the pH of groundwater. Microbial mineral precipitation is cost-effective, makes use of organic ingredients, and is environmental and ecosystem friendly.

The present invention also relates to the use of the method of the present invention for the abatement of contamination. Contamination of the environment with toxic compounds, chemicals, salts, and radioactive materials forms a serious hazard for human health and the environment. Soil and water can become polluted due to e.g. discharges of industrial waste into the soil, percolation of contaminated water into the soil, seepage from solid waste and landfills, uncontrolled disposal of sewage and sewage sludge, and excess application of pesticides, herbicides or fertilizer. The most common contaminants are petroleum hydrocarbons, heavy metals, radioactive materials, pesticides and solvents. Conventional methods of remediation include chemical leaching of the contaminants from the soil, chemical precipitation, evaporation, adsorption, ion exchange and membrane separation. All these methods have been found expensive, insufficient and ineffective. Microbial mineral precipitation appears to be an effective and environmental friendly means to capture contaminants through competitive co-precipitation, in which the contaminants are incorporated in the as calcium carbonate crystal by substituting calcium ions.

The present invention also relates to the use of the method of the present invention for capturing or retardation of heavy metals and/or perfluorinated compounds, preferably perfluorinated compounds selected from the group consisting of perfluorooctanoic acid (PFOA), perfluorooctanesulfonic acid (PFOS), perfluorooctanesulfonate (PFOS), perfluorohexane sulfonic acid (PFHxS), perfluorononanoic acid (PFNA) and polytetrafluoroethylene (PTFE).

### Example

The method of the present invention was performed by the introduction of activating, treatment and post-treatment solutions into a layer of soil between 0.0 and 200 meter in depth. An activating solution was provided containing 1 m³ substrate (consisting of urease-source material, hydrocarbon nutrient and urea) and water. Subsequently, a treating solution was provided twice containing 1 m³ substrate (consisting of calcium chloride and urea) and water. As a final step, a post-treating solution was provided containing 1 m³ substrate (consisting of calcium chloride) and water.

In another method, the following solutions were prepared as provided in table 1.

**Table 1. Solutions used in microbial mineral precipitation (in water)**

| Solution | Urease source | Nutrient | Urea | CaCI2 | Volume (per m³ material treated per %wt calcite formation) |
|---|---|---|---|---|---|
| Activating | 0.0004 %wt | 0.14 M | 0.5 M | - | 65 L |
| Treating 1 | - | 0.0014 M | 1.0 M | 0.85 M | 65 L |
| Treating 2 | - | 0.0014 M | 1.0 M | 0.85 M | 65 L |
| Post-treating | - | - | - | 1.0 M | 17 L |

An activating solution containing urease-source, 0.14 M nutrient (percol), and 0.5 M urea diluted in tap water was injected into a layer of soil to be treated between 0.0 and 200 meter in depth. In a subsequent step a treating solution 1 comprising 0.0014 M nutrient (percol), 1.0 M urea and 0.85 M CaCl₂ diluted in tap water was injected into the soil between 0.0 and 200 meter in depth. This step was repeated once using treating solution 2 as provided in table 1. In a final step a post-treating solution comprising 1.0 M CaCl₂ diluted in tap water was injected into the soil between 0.0 and 200 meter in depth.

## Claims

1. Method of microbial mineral precipitation in a porous medium having hydraulic conductivity, such as soil, sediment, ashes, concrete or the like, wherein the method comprises the subsequent steps of:
a) activating the porous medium; and
b) treating the porous medium to induce mineral precipitation, wherein the porous medium is treated with a source of urea and a source of calcium ions,
wherein step a) comprises the step of treating the porous medium with a source of urease and a source of hydrocarbon nutrient,
**characterised in that** in step b), the porous medium is treated with activated carbon, optionally in combination with a polymer.

2. Method according to claim 1, wherein the method further comprises the step of:
c) after step b), post-treating the porous medium, wherein the porous medium is treated with a source of calcium ions.

3. Method according to claim 1 or 2, wherein step a) comprises the step of:
- providing an aqueous activating solution to the porous medium, wherein the activating solution comprises the source of urease and the source of hydrocarbon nutrient.

4. Method according to claim 3, wherein the activating solution further comprises a source of urea.

5. Method according to any of the preceding claims, wherein step b) comprises the step of:
- providing an aqueous treating solution to the porous medium, wherein the treating solution comprises the source of urea and the source of calcium ions.

6. Method according to any of claims 1-4, wherein step b) comprises the subsequent steps of:
- providing a first aqueous solution to the porous medium, wherein the first solution comprises the source of urea; and
- providing a second aqueous solution to the porous medium, wherein the second solution comprises the source of calcium ions.

7. Method according to claim 5 or 6, wherein step b) further comprises the subsequent step of:
- providing an aqueous adsorbing solution to the porous medium, wherein the adsorbing solution comprises an activated carbon and, optionally, a polymer.

8. Method according to any of claims 5-7, wherein step b) is repeated.

9. Method according to any of the preceding claims, wherein step c) comprises the step of:
- providing a aqueous post-treating solution to the porous medium, wherein the post-treating solution comprises a source of calcium ions, and, optionally, wherein the post-treating solution is substantially free of a source of urea and/or a source of hydrocarbon nutrient.

10. Method according to any of the preceding claims, wherein the method further comprises the step of:
- before step a), pre-treating the porous medium, wherein the porous medium is pre-treated by providing a pre-treating solution to the porous medium, wherein the pre-treating solution comprises an ureolytic microorganism culture.

11. Method according to any of the preceding claims, wherein:
- the porous medium is selected from the group consisting of soil, sediment, ashes, geomaterials, concrete materials and concrete structures;
- the source of urea is selected from the group consisting of mammal urine, mammal excrements, wastewater, natural nitrogen fertilizers and synthetic nitrogen fertilizers;
- the source of calcium ions is selected from the group consisting of water soluble inorganic calcium salts, water soluble organic calcium compounds and calcium containing gasses or solids;
- the source of urease is selected from the group consisting of microbial produced urease, urease harvested from plants or parts or seeds thereof, and artificial synthesized urease, preferably the source of urease comprises flour, such as Jack bean flour or soy flour selected from the group consisting of low-fat soy flour and full-fat soy flour; and/or
- the source of hydrocarbon nutrient is selected from the group consisting of molasses, black treacle, protamylasse, alkane-alcohols, salts and esters containing one or more ethanoate-groups and/or fermented molasses, fermented black treacle and fermented protamylasse.

12. Method according to any of claims 3-11, wherein the solutions are provided to the porous medium at a rate of 1-5000 litre per 1 m³ porous medium.

13. Method according to any of the preceding claims, wherein a subsequent method step is performed after 1 hour to 3 months of incubation time of the respective preceding method step.

14. Method according to any of the preceding claims, wherein the method is performed in an earth layer at a depth of at least 500 m.

15. Use of the method according to any of the preceding claims for:
- the reinforcement of the porous medium;
- the abatement of contamination; or
- capturing or retardation of heavy metals and/or perfluorinated compounds, preferably perfluorinated compounds selected from the group consisting of perfluorooctanoic acid (PFOA), perfluorooctanesulfonic acid (PFOS), perfluorooctanesulfonate (PFOS), perfluorohexane sulfonic acid (PFHxS), perfluorononanoic acid (PFNA) and polytetrafluoroethylene (PTFE).
